# EUROPEAN PATENT SPECIFICATION

(11) **EP 3 923 155 B1**
(45) Date of publication and mention of the grant of the patent: **04.03.2026**
(21) Application number: 21189709.5
(22) Date of filing: 04.08.2021
(51) Int. Cl.: G06F 16/11, G06F 3/06

(54) **METHOD AND APPARATUS FOR PROCESSING SNAPSHOT, DEVICE, MEDIUM AND PRODUCT**
VERFAHREN UND VORRICHTUNG ZUR VERARBEITUNG EINES SCHNAPPSCHUSSES, VORRICHTUNG, MEDIUM UND PRODUKT
PROCÉDÉ ET APPAREIL DE TRAITEMENT D'INSTANTANÉ, DISPOSITIF, SUPPORT ET PRODUIT

(30) Priority: 22.01.2021 CN 202110090329
(43) Date of publication of application: 15.12.2021
(73) Proprietor: Beijing Baidu Netcom Science and Technology Co., Ltd., Beijing 100085 (CN)
(72) Inventor: CHEN, Cheng, Beijing, 100085 (CN)
(74) Representative: Richly & Ritschel Patentanwälte PartG mbB

(56) References cited:
- EP-A1- 3 451 173
- US-A1- 2005 021 565
- US-A1- 2019 213 089
- US-B1- 9 678 968
- SIDDHA S B ET AL: "A Persistent Snapshot Device Driver for Linux", PROCEEDINGS OF ANNUAL LINUX SHOWCASE AND CONFERENCE, XX, XX, 10 November 2001 (2001-11-10), pages 173 - 182, XP002317993

## Description

### TECHNICAL FIELD

The present disclosure relates to the field of computer technology, particularly to the field of cloud computing technology, distributed storage technology or cloud storage technology, and more particularly to a method and apparatus for processing a snapshot, a device, a medium and a product.

### BACKGROUND

At present, in a distributed storage system, snapshot technique is often adopted to implement data backup and data recovery. Here, snapshot refers to a fully available copy of a designated data set.

With the increase of the number of snapshots, in order to save storage space, some useless snapshots are required to be deleted. According to a current approach to deleting a snapshot, data read and write operations are required to be performed on massive snapshots, to determine data required to be deleted therefrom, and then, the data is deleted. In this process, there is a problem that the efficiency of the data deletion is low.
US application US 9,678,968 B1 discloses deleting a file from a distributed file system. In US 9,678,968 B1, two or more cloud controllers collectively manage distributed filesystem data that is stored in one or more cloud storage systems; the cloud controllers store metadata for the distributed filesystem, and cache and ensure data consistency for the data stored in the cloud storage systems. During operation, a cloud controller receives a request from a client to delete a file from the distributed filesystem. The cloud controller updates a user view of the distributed filesystem to present the appearance of the target file being deleted to the client, and then initiates a background deletion operation to delete the target file without negatively affecting the performance of the other users of the distributed filesystem.
US application US 2019/0213089 A1 discloses a method and system for obtaining identified content items that have been backed up. In US 2019/0213089 A1, the disclosed method includes receiving a request to obtain an identified content item. A backup location among a plurality of backup locations where the identified content item is stored is determined. It is determined whether the backup location corresponds to a serialized representation of a backup snapshot including the identified content item. In response to a determination that the backup location corresponds to the serialized representation, the identified content item is extracted from the serialized representation including building a stubbed snapshot tree using the serialized representation. As a response to the request, the identified content item is provided and extracted using the stubbed snapshot tree.
EP application EP 3451173 A1 discloses restoring a database using a fully hydrated backup. In EP 3451173 A1, a backup of at least a portion of contents of a storage volume that includes data of the database is performed. The backup includes a step of creating a new metadata tree root node. Creating the new metadata tree root node includes copying from another metadata tree root node of a tree data structure corresponding to a previous backup instance, one or more references to one or more lower tier metadata tree nodes associated with the tree data structure corresponding to the previous backup instance.

SIDDHA S B ET AL: "A Persistent Snapshot Device Driver for Linux", PROCEEDINGS OF ANNUAL LINUX SHOWCASE AND CONFERENCE, 10 November 2001, pages 173-182, discloses a persistent snapshot device driver for Linux in which the snapshots at different instances form a chain like structure, with original view (also called as primary) at the head (root) of the chain and the oldest snapshot at the tail.

### SUMMARY

The present disclosure provides a method and a device, a medium and a product. The present invention is set out in the appended set of claims.

### BRIEF DESCRIPTION OF THE DRAWINGS

The accompanying drawings are used for a better understanding of the scheme, and do not constitute a limitation to the present disclosure. Here:
Fig. 1 is a schematic diagram of an exemplary system architecture according to a first embodiment of the present disclosure;
Fig. 2 is a schematic diagram of a method for processing a snapshot according to a second embodiment of the present disclosure;
Fig. 3 is a diagram of a snapshot processing scenario in which an embodiment of the present disclosure may be implemented;
Fig. 4 is a schematic diagram of a method for processing a snapshot according to a third embodiment of the present disclosure;
Fig. 5 is a schematic diagram of a method for processing a snapshot according to a fourth embodiment of the present disclosure;
Fig. 6 is a schematic diagram of an apparatus for processing a snapshot according to a fifth embodiment of the present disclosure; and
Fig. 7 is a block diagram of an electronic device used to implement the method for processing a snapshot according to embodiments of the present disclosure.

### DETAILED DESCRIPTION OF EMBODIMENTS

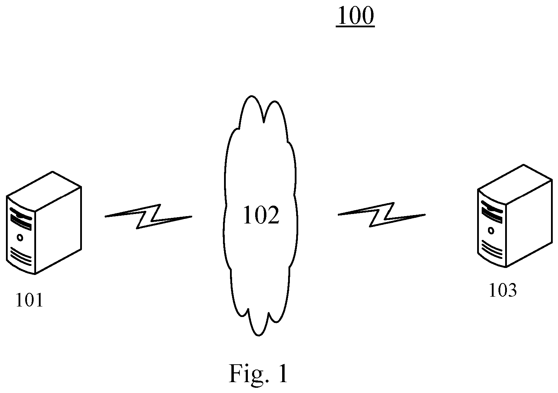

Fig. 1 is a schematic exemplary system architecture diagram according to a first embodiment of the present disclosure, the diagram illustrating an exemplary system architecture 100 in which a method for processing a snapshot or an apparatus for processing a snapshot according to an embodiment of the present disclosure may be applied.

As shown in Fig. 1, the system architecture 100 may include a first server 101, a network 102 and a second server 103. The network 102 serves as a medium providing a communication link between the first server 101 and the second server 103. The network 102 may include various types of connections, for example, wired or wireless communication links, or optical fiber cables.

The first server 101 may interact with the second server 103 via the network 102, to receive or send a message, etc. A distributed object-based storage system storing snapshots may run on the first server 101, and a distributed block-based storage system storing user data may run on the second server 103. In the scenario of creating a snapshot, a snapshot of user data is created for the user data in the distributed block-based storage system, and the snapshot of the user data is stored into the first server 101.

Further, there are different logical volumes in the second server 103. Here, a logical volume refers to a virtual disk formed by a logical disk, which may also be referred to as a disk partition. The user data may be stored in different logical volumes. During creating snapshots, it is required to create, for different logical volumes, snapshots corresponding to the different logical volumes. Particularly, a snapshot chain including a chain of snapshots corresponding to a logical volume may be generated according to the creation times of the snapshots. A parent node in the snapshot chain is a snapshot with an earlier creation time, and a child node in the snapshot chain is a snapshot with a later creation time.

During implementing the deletion of a snapshot on the basis of the above system architecture, the second server 103 may acquire the meta information of the snapshots corresponding to each logical volume, and each snapshot may have corresponding meta information. The meta information is information used for describing about information. The sub-data list of each snapshot may be called through the meta information, a sub-data list contains a plurality of pieces of sub-data obtained by partitioning the data of the snapshot. In addition, there are different data determination modes corresponding to different snapshot levels. Therefore, according to the snapshot level at which a snapshot is located, and according to the data determination mode corresponding to the snapshot level, target sub-data may be determined from the sub-data list of a current snapshot, the sub-data list of a parent node of the current snapshot and/or the sub-data list of a child node of the current snapshot. Then, the target sub-data is deleted. Particularly, the second server 103 may send to the first server 101 a delete instruction for instructing to delete the target sub-data via the network 102, and the first server 101 may delete the corresponding target sub-data in response to the delete instruction. Alternatively, after the target sub-data is deleted, the snapshot corresponding to the target sub-data may be deleted to complete the entire deletion process.

It should be noted that the first server 101 and the second server 103 may be hardware or software. When being the hardware, the first server 101 and the second server 103 may be implemented as a distributed server cluster composed of a plurality of servers, or may be implemented as a single server. When being the software, the first server 101 and the second server 103 may be implemented as a plurality of pieces of software or a plurality of software modules (e.g., software or software modules for providing a distributed service), or may be implemented as a single piece of software or a single software module, which will not be specifically defined here.

It should be noted that the method for processing a snapshot provided in embodiments of the present disclosure is generally performed by the above second server 103. Correspondingly, the apparatus for processing a snapshot may be provided in the server 103.

It should be appreciated that the numbers of the first servers, the networks, and the second servers in Fig. 1 are merely illustrative. Any number of first servers, networks, and second servers may be provided based on actual requirements.

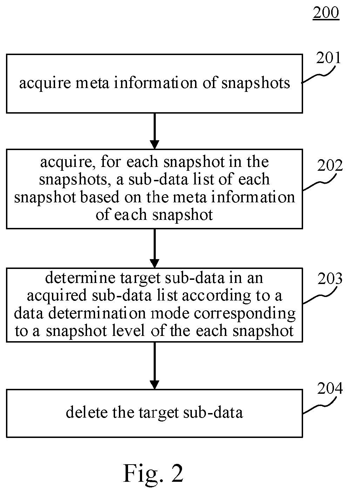

Further referring to Fig. 2, Fig. 2 is a schematic diagram of a method for processing a snapshot according to a second embodiment of the present disclosure, the diagram illustrating a flow 200 of the method for processing a snapshot according to an embodiment of the present disclosure. The method for processing a snapshot in this embodiment includes the following steps:
Step 201, acquiring meta information of snapshots.

In this embodiment, in the scenario of deleting a snapshot, an executing body (e.g., the above second server 103) may exchange data with a device (e.g., the above first server 101) for storing snapshots, to download the meta information of the snapshots therefrom. The device for storing snapshots may store extents of a snapshot and a list of slices corresponding to each extent. When a snapshot is uploaded to and stored in the device for storing snapshots, since snapshot is essentially a data block having a large amount of data, the data block may be diced and thus is partitioned into a plurality of data extents (i.e., snapshot extents) each having smaller amount of data. Accordingly, snapshot extents are obtained and uploaded to the device for storing snapshots. Further, data of a smaller unit may be created based on each snapshot extent, to obtain data slices. In the device for storing snapshots, a corresponding relationship between a snapshot extent and a slice data list containing data slices may be correspondingly stored. Here, the meta information of each snapshot may include snapshot meta information and extent meta information. Here, the snapshot meta information is information used to describe the content of the snapshot, and the extent meta information is information used to describe the snapshot extent.

Step 202, acquiring, for each snapshot in the snapshots, a sub-data list of each snapshot based on the meta information of each snapshot.

In this embodiment, the sub-data list containing a list of sub-data may refers to the list of data slices corresponding to the above snapshot extent. The data slice is a smaller object compared with the snapshot extent, and is capable of abstracting underlying arrays and providing a related operation. That is, the above snapshot extent may be obtained by dicing the snapshot, and then, the above data slice may be obtained by performing a slicing operation on the snapshot extent. The slice list composed of the data slices is the above sub-data list. The executing body may pre-store an association relationship between meta information of a snapshot and the sub-data list thereof. Particularly, the above association relationship may include an association relationship between extent meta information and the sub-data list. After the meta information of the snapshot is acquired, the corresponding sub-data list may be acquired through the meta information and the above association relationship. Alternatively, the executing body may further set, in the meta information of the snapshot, position information containing the sub-data list. By analyzing the meta information of a snapshot, the sub-data list of the snapshot may be read from the above position information.

Step 203, determining target sub-data in an acquired sub-data list according to a data determination mode corresponding to a snapshot level of the each snapshot.

In this embodiment, when a snapshot is created, the executing body pre-constructs a snapshot level relationship of snapshots. Particularly, the snapshot level of a snapshot in the snapshot level relationship is determined according to the creation times of the snapshots. According to the invention, the snapshot level of a snapshot of which the creation time is earlier is higher, and the snapshot level of a snapshot of which the creation time is later is lower. In addition, different data determination modes are preset for different snapshot levels. Here, the data determination mode refers to a manner of determining the target sub-data that needs to be deleted, and includes, but not limited to, a data determination range, a data determination condition, etc., which is not limited in embodiments of the present disclosure. Here, a corresponding relationship between each snapshot level (e.g., a parent node, a intermediate node, or a child node) and the above data determination range and/or the above data determination condition is pre-stored. The data determination mode (e.g., the data determination range and/or the data determination condition) corresponding to a snapshot level is acquired through the corresponding relationship. For example, according to the data determination mode, the data which is in the data determination range and satisfies the data determination condition is selected as the target sub-data.

Here, after the sub-data lists of the snapshots are acquired based on the meta information, through comparing the data in the sub-data lists of the snapshots with each other, such as comparing the data in a sub-data list of the current snapshot, the data in a sub-data list of a snapshot at a parent node, and/or the data in a sub-data list of a snapshot in a child node with each other, and the data existing in only one sub-data list may be determined as unreferenced sub-data. Then, the unreferenced sub-data is determined as the target sub-data required to be deleted.

Step 204, deleting the target sub-data.

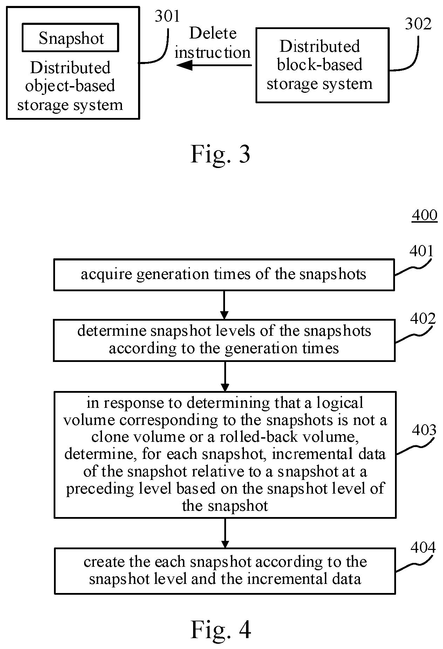

Further referring to Fig. 3, Fig. 3 is a diagram of a snapshot processing scenario in which an embodiment of the present disclosure may be implemented, the diagram being a schematic diagram of an application scenario of the method for processing a snapshot according to an embodiment of the present disclosure. In the application scenario of Fig. 3, a distributed object-based storage system 301 and a distributed block-based storage system 302 are included. The two systems may be in different servers, and the distributed object-based storage system 301 may store snapshots. The above steps 201-204 may be run in the distributed block-based storage system 302. For example, during deleting a target snapshot, the extent meta information of the target snapshot may be first acquired from the distributed object-based storage system based on the snapshot identifier of the target snapshot. Then, a sub-data list may be acquired through the extent meta information, and a sub-data list may refer to one or more sub-data lists. Further, according to a data determination mode corresponding to a snapshot level at which the target snapshot is located, target sub-data may be determined in the acquired sub-data list. A delete instruction may be sent to the distributed object-based storage system 301, to cause the distributed object-based storage system 301 to delete the target sub-data.

According to the method for processing a snapshot provided in the above embodiment of the present disclosure, in the situation of deleting a snapshot, the target sub-data need to be deleted may be quickly determined in the sub-data list of the snapshot based on the meta information of the snapshot and the data determination mode corresponding to the snapshot level of the snapshot, which improves the efficiency of the determination for the data need to be deleted, and thus, the efficiency of the deletion of the data can be improved. In addition, the distributed object-based storage system and the distributed block-based storage system are adopted, the snapshots are stored on the distributed object-based storage system, and the operation on the snapshot is performed at the distributed block-based storage system, thereby improving the system isolation.

Further referring to Fig. 4, Fig. 4 is a schematic diagram of a method for processing a snapshot according to a third embodiment of the present disclosure, the diagram illustrating a flow 400 of a method for processing a snapshot according to another embodiment of the present disclosure. As shown in Fig. 4, the method for processing a snapshot in this embodiment may include the following steps:
Step 401, acquiring generation times of the snapshots.

In this embodiment, when a snapshot is created, the generation time corresponding to the snapshot may be determined first.

Step 402, determining snapshot levels of the snapshots according to the generation times.

In this embodiment, the snapshot levels of the snapshots may be sequentially generated according to the chronological order of the generation times. For example, snapshot 1 is generated at time A, and snapshot 2 is generated at time B. If time A is earlier than time B, the snapshot levels are generated according to the chronological order of the snapshot 1 and the snapshot 2. That is, the snapshot level of the snapshot 1 is higher than the snapshot level of the snapshot 2.

Step 403, in response to determining that a logical volume corresponding to the snapshots is not a clone volume or a rolled-back volume, determining, for each snapshot, incremental data of the snapshot relative to a snapshot at a preceding level based on the snapshot level of the snapshot.

In this embodiment, each of the snapshots, when created, is often created based on a logical volume. That is, a snapshot chain corresponding to the logical volume is created based on the logical volume, and snapshots at the above snapshot levels constitute the snapshot chain. If the logical volume corresponding to the snapshots currently created is not any one of a clone volume or a rolled-back volume, the incremental data of the snapshot relative to the snapshot at the preceding level is determined for each of the snapshots. Here, the clone volume refers to a volume created based on a clone, and the rolled-back volume refers to a volume generated through a rollback.

In some alternative implementations of this embodiment, the following step may also be performed: in response to determining that the logical volume corresponding to the snapshots is a clone volume or a rolled-back volume, creating a snapshot according to the snapshot level.

In this implementation, if the logical volume is a clone volume, or if the logical volume is a rolled-back volume, a full/complete snapshot may be created according to the snapshot level. In the situation of a clone volume or a rolled-back volume, this process may reduce the complexity caused by the snapshot chain and improve the speed at which the snapshot is deleted in the logical volume of this type.

Step 404, creating the each snapshot according to the snapshot level and the incremental data.

In this embodiment, if the logical volume is not a clone volume or a rolled-back volume, a snapshot may be created according to the snapshot level and the incremental data. The way in which a snapshot is created by using the incremental data may reduce the amount of data stored, thereby reducing the cost of data storage.

It can be seen from Fig. 4 that, compared with the embodiment corresponding to Fig. 2, according to the flow 400 of the method for processing a snapshot in this embodiment, during creating snapshots, the snapshot levels and the incremental data may be used as a basis to obtain snapshots having a snapshot level relationship therebetween. The reference relationship between the snapshots can be reasonably represented by the snapshot level relationship. The reference relationship is used as a basis during deleting a snapshot, which improves the efficiency of the determination for the data to be deleted, and further improves the efficiency of the deletion of the data. In addition, the storage based on the incremental data can reduce the amount of the stored data, thereby reducing the storage cost. Moreover, for the special situation of a clone volume or a rolled-back volume, full/compete snapshot may be created, which reduces the data complexity on the basis of the reduction of the storage cost.

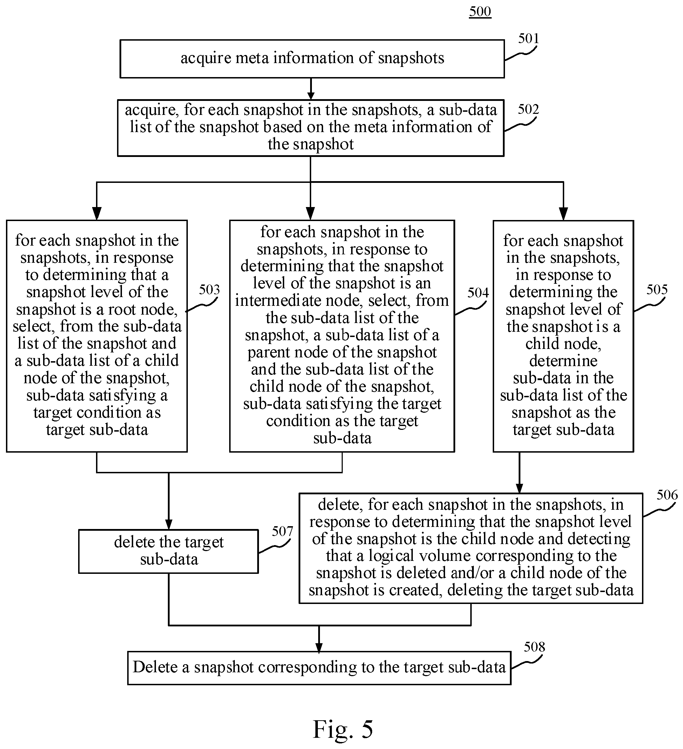

Further referring to Fig. 5, Fig. 5 is a schematic diagram of a method for processing a snapshot according to a fourth embodiment of the present disclosure, the diagram illustrating a flow 500 of a method for processing a snapshot according to another embodiment of the present disclosure. As shown in Fig. 5, the method for processing a snapshot in this embodiment may include the following steps:
Step 501, acquiring meta information of snapshots.
   In this embodiment, for the detailed description of step 501, reference is made to the detailed description of step 201, which will not be repeatedly described here.
Step 502, acquiring, for each snapshot in the snapshots, a sub-data list of the snapshot based on the meta information of the snapshot.
   In this embodiment, for the detailed description of step 502, reference is made to the detailed description of step 202, which will not be repeatedly described here.
Step 503, for each snapshot in the snapshots, in response to determining that a snapshot level of the snapshot is a root node, selecting, from the sub-data list of the snapshot and a sub-data list of a child node of the snapshot, sub-data satisfying a target condition as target sub-data.

In this embodiment, snapshot levels include the root node, an intermediate node, and a child node.

In this embodiment, the root node refers to a node whose a parent node is empty and whose child node is not empty. In this case, the data determination range in a data determination mode may refer to the sub-data list of the current snapshot at the root node and the sub-data list of the child node of the current snapshot, and the data determination condition in the data determination approach may refer to the target condition.

Step 504, for each snapshot in the snapshots, in response to determining that the snapshot level of the snapshot is an intermediate node, selecting, from the sub-data list of the snapshot, a sub-data list of a parent node of the snapshot and the sub-data list of the child node of the snapshot, sub-data satisfying the target condition as the target sub-data.

In this embodiment, an intermediate node refers to a node whose parent and child nodes are not empty. In this case, the data determination range in the data determination mode may refer to the sub-data list of the current snapshot at the intermediate node, the sub-data list of the child node of the current snapshot and the sub-data list of the parent node of the current snapshot, and the data determination condition in the data determination mode may refer to the target condition.

In some alternative implementations of this embodiment, the target condition is: data creation time of sub-data in a sub-data list satisfying a preset time condition; and/or existing in only one sub-data list.

In this implementation, if the above target condition is satisfied, the data creation time of the sub-data list where the target sub-data located satisfies the preset time condition, and/or the target sub-data exists in only one sub-data list. Here, the preset time condition may refer to that the data creation time is earlier than a preset time, or the data creation time is the times in a preset number of top rankings after the data creation times of all the sub-data are sorted according to chronological order. Through the preset time condition, sub-data whose data creation time is earlier may be screened. Alternatively, whether the data creation time satisfies the preset time condition may be determined through the version number corresponding to the sub-data. If the version number corresponding to the sub-data is lower, it indicates that the data creation time satisfies the preset time condition. In addition, since the snapshots in snapshot chain are created based on incremental data, so that if the sub-data exists in a plurality of sub-data lists, it indicates that the sub-data is referenced. At this situation, if the referenced sub-data is deleted, a lack of the basis for read and write operations on other data would arise. Thus, the referenced data should not be deleted at this time. If the sub-data exists in only one sub-data list, it indicates that the sub-data is not referenced, and the sub-data may be deleted at this situation.

Step 505, for each snapshot in the snapshots, in response to determining the snapshot level of the snapshot is a child node, determining sub-data in the sub-data list of the snapshot as the target sub-data.

In this embodiment, the child node refers to a node whose parent node is not empty and whose child node is empty. In this case, the data determination range in the data determination mode refers to the sub-data list of the snapshot at the child node, and the data determination condition in the data determination mode refers to that all the data in the sub-data list of the snapshot at the child node is determined as the target sub-data.

Step 506, deleting, for each snapshot in the snapshots, in response to determining that the snapshot level of the snapshot is the child node and detecting that a logical volume corresponding to the snapshot is deleted and/or a child node of the snapshot is created, deleting the target sub-data.

In this embodiment, during deleting the snapshot at the child node, the delete operation is performed after a certain condition is satisfied, rather than performed immediately. That is, when the logical volume corresponding to the snapshot at the child node is directly deleted, then the snapshot at the child node is deleted, or when a child node of the snapshot is created, all the sub-data in the sub-data list of the snapshot is deleted.

It should be noted that the performing of step 507 may be triggered after step 503 or step 504 is performed. After step 505 is performed, the performing of step 506 is triggered.

Step 507, deleting the target sub-data.

Step 508, deleting a snapshot corresponding to the target sub-data.

In this embodiment, after the target sub-data is deleted, the snapshot corresponding to the target sub-data may be deleted. Particularly, towards preceding levels, the sub-data list where the target sub-data is located, the extent data corresponding to the sub-data list, and the snapshot data corresponding to the extent data may be deleted. In addition, the meta information of the snapshot corresponding to the target sub-data may be deleted. Here, during deleting the snapshot corresponding to the target sub-data, the extent snapshot corresponding to the sub-data list in which the target sub-data is may be deleted first, and then, the snapshot corresponding to the extent snapshot may be deleted. After the extent snapshot is deleted, the meta information of the extent snapshot may be deleted. After the snapshot is deleted, the meta information of the snapshot may be deleted.

It can be seen from Fig. 5 that, as compared with the embodiment corresponding to Fig. 2, according to the flow 500 of the method for processing a snapshot in this embodiment, for the root node, the intermediate node and the child node, the data required to be deleted may also be determined by adopting different data determination modes. By taking the characteristics of nodes of different types into consideration, the selection for the data required to be deleted is relatively accurate, which reduces to a certain extent the probability that the data is erroneously deleted. In addition, for a snapshot at a child node, since the snapshot at the child node is required to be used as a reference for the creation of the snapshot at a next/succeeding node, the data corresponding to the child node may be deleted at appropriate time, that is, the corresponding data may be deleted when the logical volume corresponding to the snapshot is deleted or when a child node of the snapshot is created, thereby further improving the reliability of the deletion of the data.

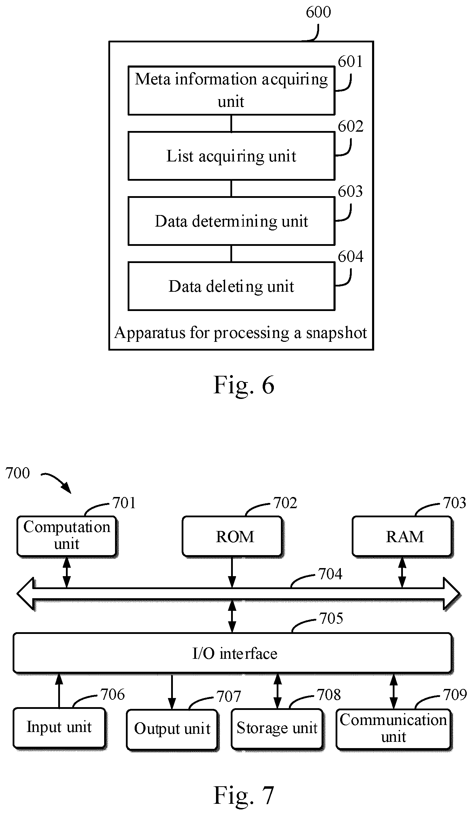

Further referring to Fig. 6, Fig. 6 is a schematic diagram of an apparatus for processing a snapshot according to a fifth embodiment of the present disclosure, the diagram providing an embodiment of an apparatus for processing a snapshot. The embodiment of the apparatus corresponds to the embodiment of the method shown in Fig. 2. The apparatus may be applied in various servers.

As shown in Fig. 6, the apparatus 600 for processing a snapshot in this embodiment includes: a meta information acquiring unit 601, a list acquiring unit 602, a data determining unit 603 and a data deleting unit 604.

The meta information acquiring unit 601 is configured to acquire meta information of snapshots.

The list acquiring unit 602 is configured to acquire, for each snapshot in the snapshots, a sub-data list of the each snapshot based on the meta information of the each snapshot.

The data determining unit 603 is configured to determine target sub-data in the acquired sub-data list according to a data determination mode corresponding to a snapshot level of the each snapshot.

The data deleting unit 604 is configured to delete the target sub-data.

In some alternative implementations of this embodiment, the snapshot levels include a root node, an intermediate node, and a child node. The data determining unit 603 is further configured to: for a snapshot in the snapshots, in response to determining that a snapshot level of the snapshot is the root node, select, from the sub-data list of the snapshot and a sub-data list of a child node of the snapshot, sub-data satisfying a target condition as the target sub-data.

In some alternative implementations of this embodiment, the data determining unit 603 is further configured to: for a snapshot in the snapshots, in response to determining that a snapshot level of the snapshot is the intermediate node, select, from the sub-data list of the snapshot, a sub-data list of a parent node of the snapshot and the sub-data list of the child node of the snapshot, sub-data satisfying the target condition as the target sub-data.

In some alternative implementations of this embodiment, the target condition is: data creation time of sub-data in a sub-data list satisfying a preset time condition; and/or existing in a single sub-data list.

According to the invention, the data determining unit 603 is further configured to: for a snapshot in the snapshots, in response to determining that a snapshot level of the snapshot is the child node, select sub-data in the sub-data list of the snapshot as the target sub-data.

According to the invention, the data deleting unit 604 is further configured to: for the snapshot in the snapshots, delete the target sub-data in response to determining that the snapshot level of the snapshot is the child node and detecting that a logical volume corresponding to the snapshot is deleted and/or a child node of the snapshot is created.

In some alternative implementations of this embodiment, the data deleting unit 604 is further configured to: delete a snapshot corresponding to the target sub-data.

In some alternative implementations of this embodiment, the above apparatus further includes: a time acquiring unit, configured to acquire generation times of the snapshots; a level determining unit, configured to determine snapshot levels of the snapshots according to the generation times; an increment determining unit, configured to determine, in response to determining that the logical volume corresponding to the snapshots is not a clone volume or a rolled-back volume, determine, for each snapshot, incremental data of the each snapshot relative to a snapshot at a preceding level based on a snapshot level of the each snapshot; and a snapshot creating unit, configured to create the each snapshot according to the snapshot level and the incremental data.

In some alternative implementations of this embodiment, the snapshot creating unit is further configured to: in response to determining that the logical volume corresponding to the snapshots is the clone volume or the rolled-back volume, create the each snapshot based on the snapshot level.

It should be understood that the units 601-604 described in the apparatus 600 for processing a snapshot correspond to the steps in the method described with reference to Fig. 2, respectively. Thus, the above operations and features described for the method for processing a snapshot are also applicable to the apparatus 600 and the units contained therein, which will not be repeatedly described here.

According to an embodiment of the present disclosure, an electronic device, a readable storage medium, and a computer program product are provided.

Fig. 7 is a block diagram of an electronic device 700 used to implement the method for processing a snapshot according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 7, the electronic device 700 includes a computation unit 701, which may execute various appropriate actions and processes in accordance with a computer program stored in a read-only memory (ROM) 702 or a computer program loaded into a random access memory (RAM) 703 from a storage unit 708. The RAM 703 also stores various programs and data required by operations of the device 700. The computation unit 701, the ROM 702 and the RAM 703 are connected to each other through a bus 704. An input/output (I/O) interface 705 is also connected to the bus 704.

The following components of the device 700 are connected to the I/O interface 705: an input portion 706 including a keyboard, a mouse etc.; an output portion 707 comprising a display device of any one of various types, a speaker etc.; a storage portion 708 including a disk, a compact disk and the like; and a communication portion 709 comprising a network interface card, such as a LAN card and a modem. The communication portion 709 allows the device 700 to exchange information/data with another device through a network such as the Internet and/or various telecommunication networks.

The computing unit 701 may be various general-purpose and/or specific-purpose processing components having processing and computing capabilities. Some examples of the computing unit 701 include, but are not limited to, a central processing unit (CPU), a graphics processing unit (GPU), various specific artificial intelligence (AI) computing chips, various computing units running machine learning model algorithms, a digital signal processor (DSP), and any appropriate processor, controller, microcontroller and the like. The computing unit 701 performs various methods and processing described above, such as the method for stabilizing an image. For example, in some embodiments, the method for stabilizing an image may be implemented as a computer software program, which is tangibly included in a machine-readable medium, such as the storage unit 708. In some embodiments, part or all of the computer program may be loaded and/or installed on the device 700 through the ROM 702 and/or the communication unit 709. When the computer program is loaded into the RAM 703 and executed by the computing unit 701, one or more steps of the method for stabilizing an image described above may be performed. Alternatively, in other embodiments, the computing unit 701 may be configured to perform the method for stabilizing an image in any other appropriate manner (such as through firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of the present disclosure may be written in any combination of one or more programming languages. These program codes may be provided to a processor or controller of a general-purpose computer, specific-purpose computer or other programmable data processing apparatus, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

## Claims

1. A computer-implemented method for processing a snapshot, comprising:
acquiring (201, 501)meta information of snapshots;
acquiring(202, 502), for each snapshot in the snapshots, a sub-data list of the each snapshot based on the meta information of the each snapshot;
determining (203) target sub-data in the acquired sub-data list according to a data determination mode corresponding to a snapshot level of the each snapshot in a snapshot level relationship, wherein the snapshot level of each snapshot in the snapshot level relationship is determined according to a creation time of the snapshot, and a snapshot level of a snapshot with an earlier creation time is higher than a snapshot level of a snapshot with a later creation time, wherein the data determination mode refers to a manner of determining the target sub-data that needs to be deleted, the data determination mode comprising a data determination range and a data determination condition, and wherein a corresponding relationship between each snapshot level and the data determination range and the data determination condition is pre-stored, and the data determination mode corresponding to the snapshot level of the each snapshot in the snapshot level relationship is acquired through the corresponding relationship; and
deleting (204, 507) the target sub-data,
wherein the snapshot level refers to a root node, an intermediate node, or a child node,
wherein the determining(203) target sub-data in the acquired sub-data list according to a data determination mode corresponding to a snapshot level of the each snapshot comprises: for a snapshot in the snapshots, in response to determining that a snapshot level of the snapshot is the child node, selecting sub-data in the sub-data list of the snapshot as the target sub-data, and
wherein the deleting (204, 507) the target sub-data comprises: for the snapshot in the snapshots, deleting the target sub-data in response to determining that the snapshot level of the snapshot is the child node and detecting that a logical volume corresponding to the snapshot is deleted and/or a child node of the snapshot is created.

2. The method according to claim 1,
the determining (203) target sub-data in the acquired sub-data list according to a data determination mode corresponding to a snapshot level of the each snapshot comprises:
for a snapshot in the snapshots, in response to determining that a snapshot level of the snapshot is the root node, selecting, from the sub-data list of the snapshot and a sub-data list of a child node of the snapshot, sub-data satisfying a target condition as the target sub-data.

3. The method according to claim 2, wherein the determining(203) target sub-data in the acquired sub-data list according to a data determination mode corresponding to a snapshot level of the each snapshot comprises:
for a snapshot in the snapshots, in response to determining that a snapshot level of the snapshot is the intermediate node, selecting, from the sub-data list of the snapshot, a sub-data list of a parent node of the snapshot and the sub-data list of the child node of the snapshot, sub-data satisfying the target condition as the target sub-data.

4. The method according to claim 2 or 3, wherein the target condition is:
data creation time of sub-data in a sub-data list satisfying a preset time condition; and/or
existing in only one sub-data list.

5. The method according to claim 1, further comprising:
deleting (508) a snapshot corresponding to the target sub-data.

6. The method according to claim 1, further comprising:
acquiring (401)generation times of the snapshots;
determining (402) snapshot levels of the snapshots according to the generation times;
in response to determining that the logical volume corresponding to the snapshots is not a clone volume or a rolled-back volume, determining (403), for each snapshot, incremental data of the each snapshot relative to a snapshot at a preceding level based on a snapshot level of the each snapshot; and
creating (404) the each snapshot according to the snapshot level and the incremental data.

7. The method according to claim 1, further comprising:
in response to determining that the logical volume corresponding to the snapshots is the clone volume or the rolled-back volume, creating the each snapshot based on the snapshot level.

8. An electronic device for performing a method for processing a snapshot, the electronic device comprising:
at least one computation unit; and
a storage unit, communicated with the at least one computation unit,
wherein the storage unit stores an instruction executable by the at least one computation unit, and the instruction is executed by the at least one computation unit, to enable the at least one computation unit to perform the method according to any one of claims 1-7.

9. A non-transitory computer readable storage medium, storing a computer instruction, wherein the computer instruction is used to cause a processor to perform the method according to any one of claims 1-7.

10. A computer program product, comprising a computer program, wherein the computer program, when executed by a processor, cause the processor to implement the method according to any one of claims 1-7.

## Patentansprüche

1. Verfahren, das computerimplementiert ist, um einen Snapshot zu verarbeiten, umfassend:
Erfassen (201, 501) von Metainformationen von Snapshots;
Erfassen (202, 502), für jeden Snapshot in den Snapshots, einer Unterdatenliste jedes Snapshots auf Grundlage der Metainformationen jedes Snapshots;
Bestimmen (203) von Ziel-Teildaten in der erfassten Teildatenliste gemäß einem Datenbestimmungsmodus, der einem Snapshot-Level jedes Snapshots in einer Snapshot-Level-Beziehung entspricht, wobei der Snapshot-Level jedes Snapshots in der Snapshot-Level-Beziehung gemäß einem Erstellungszeitpunkt des Snapshots bestimmt wird und ein Snapshot-Level eines Snapshots mit einem früheren Erstellungszeitpunkt höher ist als ein Snapshot-Level eines Snapshots mit einem späteren Erstellungszeitpunkt, wobei sich der Datenbestimmungsmodus auf eine Art und Weise der Bestimmung der Ziel-Teildaten bezieht, die gelöscht werden müssen, wobei der Datenbestimmungsmodus einen Datenbestimmungsbereich und eine Datenbestimmungsbedingung umfasst und wobei eine entsprechende Beziehung zwischen jedem Snapshot-Level und dem Datenbestimmungsbereich und der Datenbestimmungsbedingung vorgespeichert ist und der Datenbestimmungsmodus, der dem Snapshot-Level jedes Snapshots in der Snapshot-Level-Beziehung entspricht, durch die entsprechende Beziehung erfasst wird; und
Löschen (204, 507) der Ziel-Teildaten,
wobei sich die Snapshot-Ebene auf einen Wurzelknoten, einen Zwischenknoten oder einen Kindknoten bezieht,
wobei das Bestimmen (203) von Ziel-Teildaten in der erfassten Teildatenliste gemäß einem Datenbestimmungsmodus, der einer Snapshot-Ebene jedes Snapshots entspricht, Folgendes umfasst: für einen Snapshot in den Snapshots, in Reaktion auf das Bestimmen, dass eine Snapshot-Ebene des Snapshots der untergeordnete Knoten ist, Auswählen von Teildaten in der Teildatenliste des Snapshots als Ziel-Teildaten, und
wobei das Löschen (204, 507) der Ziel-Teildaten Folgendes umfasst: für den Snapshot in den Snapshots Löschen der Ziel-Teildaten als Reaktion auf das Bestimmen, dass die Snapshot-Ebene des Snapshots der untergeordnete Knoten ist, und Erfassen, dass ein logisches Volume, das dem Snapshot entspricht, gelöscht wird und/oder ein untergeordneter Knoten des Snapshots erstellt wird.

2. Verfahren nach Anspruch 1,
das Bestimmen (203) von Ziel-Teildaten in der erfassten Teildatenliste gemäß einem Datenbestimmungsmodus, der einem Snapshot-Level jedes Snapshots entspricht, Folgendes umfasst:
für einen Snapshot in den Snapshots als Reaktion auf das Bestimmen, dass eine Snapshot-Ebene des Snapshots der Wurzelknoten ist, Auswählen von Unterdaten, die eine Zielbedingung erfüllen, als die Zielunterdaten aus der Unterdatenliste des Snapshots und einer Unterdatenliste eines untergeordneten Knotens des Snapshots.

3. Verfahren nach Anspruch 2, wobei das Bestimmen (203) von Ziel-Teildaten in der erfassten Teildatenliste gemäß einem Datenbestimmungsmodus, der einem Snapshot-Level jedes Snapshots entspricht, Folgendes umfasst:
für einen Snapshot in den Snapshots als Reaktion auf das Bestimmen, dass eine Snapshot-Ebene des Snapshots der Zwischenknoten ist, Auswählen, aus der Unterdatenliste des Snapshots, einer Unterdatenliste eines übergeordneten Knotens des Snapshots und der Unterdatenliste des untergeordneten Knotens des Snapshots, von Unterdaten, die die Zielbedingung erfüllen, als die Zielunterdaten.

4. Verfahren nach Anspruch 2 oder 3, wobei die Zielbedingung ist:
Datenerstellungszeit von Unterdaten in einer Unterdatenliste, die eine voreingestellte Zeitbedingung erfüllt; und/oder
Vorhandensein in nur einer Teildatenliste.

5. Verfahren nach Anspruch 1, ferner umfassend:
Löschen (508) eines Snapshots, der den Ziel-Teildaten entspricht.

6. Verfahren nach Anspruch 1, ferner umfassend:
Erfassen (401) von Generierungszeiten der Snapshots;
Bestimmen (402) von Snapshot-Levels der Snapshots gemäß den Generierungszeiten;
als Reaktion auf das Bestimmen, dass das logische Volume, das den Snapshots entspricht, kein Klon-Volume oder ein Rollback-Volume ist, Bestimmen (403), für jeden Snapshot, inkrementelle Daten jedes Snapshots relativ zu einem Snapshot auf einer vorhergehenden Ebene basierend auf einer Snapshot-Ebene jedes Snapshots; und
Erstellen (404) jedes Snapshots gemäß der Snapshot-Ebene und den inkrementellen Daten.

7. Verfahren nach Anspruch 1, ferner umfassend:
als Reaktion auf das Bestimmen, dass das logische Volume, das den Snapshots entspricht, das Klon-Volume oder das Rollback-Volume ist, Erstellen jedes Snapshots auf Grundlage des Snapshot-Levels.

8. Elektronische Vorrichtung zum Durchführen eines Verfahrens zum Verarbeiten eines Schnappschusses, wobei die elektronische Vorrichtung Folgendes umfasst:
mindestens eine Recheneinheit; und
eine Speichereinheit, die mit der mindestens einen Recheneinheit kommuniziert,
wobei die Speichereinheit eine durch die mindestens eine Recheneinheit ausführbare Anweisung speichert und die Anweisung durch die mindestens eine Recheneinheit ausgeführt wird, um es der mindestens einen Recheneinheit zu ermöglichen, das Verfahren nach einem der Ansprüche 1-7 durchzuführen.

9. Nichtflüchtiges computerlesbares Speichermedium, das eine Computeranweisung speichert, wobei die Computeranweisung verwendet wird, um einen Prozessor zu veranlassen, das Verfahren nach einem der Ansprüche 1-7 durchzuführen.

10. Computerprogrammprodukt, umfassend ein Computerprogramm, wobei das Computerprogramm, wenn es von einem Prozessor ausgeführt wird, den Prozessor veranlasst, das Verfahren nach einem der Ansprüche 1-7 umzusetzen.

## Revendications

1. Procédé implémenté par ordinateur permettant de traiter un instantané, comprenant :
l'acquisition (201, 501) de méta-informations d'instantanés ;
l'acquisition (202, 502), pour chaque instantané dans les instantanés, d'une liste de sous-données de chacun des instantanés en fonction des méta-informations de chacun des instantanés ;
la détermination (203) de sous-données cibles dans la liste de sous-données acquise selon un mode de détermination de données correspondant à un niveau d'instantané de chacun des instantanés dans une relation de niveau d'instantané, dans lequel le niveau d'instantané de chaque instantané dans la relation de niveau d'instantané est déterminé selon un moment de création de l'instantané, et un niveau d'instantané d'un instantané avec un moment de création antérieur est supérieur à un niveau d'instantané d'un instantané avec un moment de création postérieur, dans lequel le mode de détermination de données fait référence à une manière de déterminer les sous-données cibles qui doivent être supprimées, le mode de détermination de données comprenant une plage de détermination de données et une condition de détermination de données, et dans lequel une relation correspondante entre chaque niveau d'instantané et la plage de détermination de données et la condition de détermination de données est préstockée, et le mode de détermination de données correspondant au niveau d'instantané de chacun des instantanés dans la relation de niveau d'instantané est acquis par le biais de la relation correspondante ; et
la suppression (204, 507) des sous-données cibles,
dans lequel le niveau d'instantané fait référence à un nœud racine, à un nœud intermédiaire ou à un nœud enfant,
dans lequel la détermination (203) de sous-données cibles dans la liste de sous-données acquise selon un mode de détermination de données correspondant à un niveau d'instantané de chacun des instantanés comprend : pour un instantané dans les instantanés, en réponse à la détermination qu'un niveau d'instantané de l'instantané est le nœud enfant, la sélection de sous-données dans la liste de sous-données de l'instantané en guise de sous-données cibles, et
dans lequel la suppression (204, 507) des sous-données cibles comprend : pour l'instantané dans les instantanés, la suppression des sous-données cibles en réponse à la détermination que le niveau d'instantané de l'instantané est le nœud enfant et à la détection qu'un volume logique correspondant à l'instantané est supprimé et/ou qu'un nœud enfant de l'instantané est créé.

2. Procédé selon la revendication 1,
la détermination (203) de sous-données cibles dans la liste de sous-données acquise selon un mode de détermination de données correspondant à un niveau d'instantané de chacun des instantanés comprend :
pour un instantané dans les instantanés, en réponse à la détermination qu'un niveau d'instantané de l'instantané est le nœud racine, la sélection, parmi la liste de sous-données de l'instantané et d'une liste de sous-données d'un nœud enfant de l'instantané, de sous-données respectant une condition cible en guise de sous-données cibles.

3. Procédé selon la revendication 2, dans lequel la détermination (203) de sous-données cibles dans la liste de sous-données acquise selon un mode de détermination de données correspondant à un niveau d'instantané de chacun des instantanés comprend :
pour un instantané dans les instantanés, en réponse à la détermination qu'un niveau d'instantané de l'instantané est le nœud intermédiaire, la sélection, parmi la liste de sous-données de l'instantané, une liste de sous-données d'un nœud parent de l'instantané et la liste de sous-données du nœud enfant de l'instantané, de sous-données respectant la condition cible en guise de sous-données cibles.

4. Procédé selon la revendication 2 ou 3, dans lequel la condition cible est :
le moment de création de données de sous-données dans une liste de sous-données respectant une condition de moment prédéfinie ; et/ou
existante uniquement dans une liste de sous-données.

5. Procédé selon la revendication 1, comprenant en outre :
la suppression (508) d'un instantané correspondant aux sous-données cibles.

6. Procédé selon la revendication 1, comprenant en outre :
l'acquisition (401) de moments de génération des instantanés ;
la détermination (402) de niveaux d'instantané des instantanés selon les moments de génération ;
en réponse à la détermination que le volume logique correspondant aux instantanés n'est pas un volume clone ou un volume restauré, la détermination (403), pour chaque instantané, de données incrémentielles de chacun des instantanés par rapport à un instantané à un niveau précédent en fonction d'un niveau d'instantané de chacun des instantanés ; et
la création (404) de chacun des instantanés selon le niveau d'instantané et les données incrémentielles.

7. Procédé selon la revendication 1, comprenant en outre :
en réponse à la détermination que le volume logique correspondant aux instantanés est le volume clone ou le volume restauré, la création de chacun des instantanés en fonction du niveau d'instantané.

8. Dispositif électronique permettant de mettre en œuvre un procédé permettant de traiter un instantané, le dispositif électronique comprenant :
au moins une unité de calcul ; et
une unité de stockage, en communication avec l'au moins une unité de calcul,
dans lequel l'unité de stockage stocke une instruction exécutable par l'au moins une unité de calcul, et l'instruction est exécutée par l'au moins une unité de calcul, pour permettre à l'au moins une unité de calcul de mettre en œuvre le procédé selon l'une quelconque des revendications 1 à 7.

9. Support de stockage non transitoire lisible par ordinateur, stockant une instruction d'ordinateur, dans lequel l'instruction d'ordinateur est utilisée pour amener un processeur à mettre en œuvre le procédé selon l'une quelconque des revendications 1 à 7.

10. Produit programme d'ordinateur, comprenant un programme d'ordinateur, dans lequel le programme d'ordinateur, lorsqu'il est exécuté par un processeur, amène le processeur à implémenter le procédé selon l'une quelconque des revendications 1 à 7.
